# FASCICULE DE BREVET EUROPEEN

(11) **EP 2 352 213 B1**
(45) Date de publication et mention de la délivrance du brevet: **17.02.2016**
(21) Numéro de dépôt: 10354079.5
(22) Date de dépôt: 22.11.2010
(51) Int. Cl.: H02H 1/04, H02H 3/33

(54) **Dispositif et procédé de protection différentielle et appareil électrique comportant un tel dispositif**
Device and method for differential protection and electronic apparatus including said device
Vorrichtung und Verfahren zum Differentialschutz, und eine solche Vorrichtung enthaltendes elektrisches Gerät

(30) Priorité: 17.12.2009 FR 0906112
(43) Date de publication de la demande: 03.08.2011
(73) Titulaire: Schneider Electric Industries SAS, 92500 Rueil-Malmaison (FR)
(72) Inventeur: Zeller, Clément, 38050 Grenoble Cedex 09 (FR); Tian, Simon, 38050 Grenoble Cedex 09 (FR)
(74) Mandataire: Tripodi, Paul

(56) Documents cités:
- US-A- 5 600 523
- US-A- 5 856 902

## Description

### DOMAINE TECHNIQUE

L'invention concerne un dispositif de protection différentielle comportant :
- des moyens de mesure de courant différentiel, et
- des moyens de traitement de défaut différentiel connectés aux moyens de mesure pour recevoir un signal de mesure fourni par les moyens de mesure et pour fournir un signal de déclenchement à des moyens actionneurs.

L'invention concerne un appareil de coupure électrique comportant les conducteurs principaux connectés en série avec des contacts principaux, un mécanisme d'ouverture desdits contacts principaux et un tel dispositif.

L'invention concerne aussi un procédé de protection différentielle comportant :
- la mesure d'un signal de mesure de courant différentiel, et
- le traitement de défaut différentiel pour fournir un signal de déclenchement lorsque le signal de défaut différentiel dépasse un seuil de déclenchement prédéterminé pendant une durée prédéterminée.

### ETAT DE LA TECHNIQUE

Des dispositifs de protection différentielle connus tels que ceux décrits dans les demandes de brevets EP1111750 et EP1441429 et celui représenté sur le schéma de la figure 1 comportent un capteur 1 de mesure de courant différentiel Id connecté à un circuit de traitement 2 pour déclencher l'ouverture de contact 3 principaux à travers un relais de déclenchement 4. Lorsque le dispositif de protection différentielle n'est pas dans la catégorie des dispositifs devant fonctionner à propre courant, le circuit de traitement est généralement alimenté par un circuit d'alimentation 5. Le capteur 1 de mesure comporte généralement un tore 6 en matériau magnétique entourant des conducteurs principaux 7 un enroulement secondaire 8 fournissant un courant de mesure Ids représentatif du courant différentiel Id. Le courant secondaire Ids traverse une résistance de mesure 9 pour fournir au circuit de traitement un signal de mesure Vds représentatif du courant secondaire Ids. Deux diodes 10 connectées en tête-bêche limitent la tension du signal Vds pour protéger le circuit de traitement.

De perturbations de forte énergie appliquées sur les conducteurs principaux et générant de forts courants différentiels peuvent perturber le fonctionnement des capteurs de courant 1. De tels courants différentiels sont dus notamment à des défauts différentiels de forte valeur apparaissant pendant une durée courte, par exemple des défauts supérieurs à plusieurs fois un seuil de déclenchement pendant une demi-alternance. Certains courants peuvent atteindre plusieurs ampères. D'autres courants perturbateurs sont dus à des courants provoqués par des décharges de tests de tenues à des ondes normalisées par exemple 8/20 ou à des décharges réelles entre les conducteurs principaux et des masses ou la terre.

De forts courants différentiels de courte durée ne doivent pas faire déclencher l'ouverture des contacts principaux lorsque le dispositif de protection différentiel est en tête de distribution électrique. Souvent ce type de dispositif comporte une temporisation du déclenchement avec un temps minimum de défaut et une durée maximale de déclenchement pour assurer une sélectivité avec des appareils de protection différentielle situés en aval.

En particulier lorsque le capteur de courant est un tore à circuit magnétique, de l'énergie stockée dans le capteur continue à fournir du courant secondaire Ids même après la disparition du fort courant différentiel sur les conducteurs principaux. Ce courant secondaire de traine est vu par le circuit de traitement comme un courant de défaut persistant et peut donner lieu à un déclenchement alors que le défaut a disparu. Dans ces cas, les temporisations pourraient ne pas assurer une immunité suffisante aux courants perturbateurs de très forte énergie. Ainsi, de tels courants perturbateurs de très forte énergie peuvent affecter la sélectivité des dispositifs de protection sélectifs. Des documents US5856902 et US5600523 décrivent des dispositifs aptes à être immunisés mais ne traitant pas de sélectivité.

### EXPOSE DE L'INVENTION

L'invention a pour but un dispositif et un procédé de protection différentielle à très fort niveau d'immunité aux courants perturbateurs.

Dans un dispositif de protection différentielle selon l'invention comportant :
- des moyens de mesure de courant différentiel,
- des moyens de traitement de défaut différentiel connectés aux moyens de mesure pour recevoir un signal de mesure fourni par les moyens de mesure et pour fournir un signal de déclenchement à des moyens actionneurs, comporte :
- des moyens de détection de signaux à forte énergie perturbant lesdits moyens de mesure, et
- des moyens d'inhibition connectés audits moyens de détection pour inhiber la fourniture dudit signal de déclenchement fourni par les moyens de traitement lorsque lesdits moyens de détection détectent la présence de signaux à forte énergie.

Selon l'invention, lesdits moyens de détection détectent la présence de signaux à forte énergie en contrôlant un manque de passage aux environs de zéro dudit signal de mesure pendant une durée prédéterminée, et ladite durée prédéterminée est supérieure à une demi-période ou à une alternance du courant d'un réseau électrique à protéger et inférieure à un temps de déclenchement dudit dispositif de protection différentielle.

Dans un mode de réalisation particulier, les moyens de détection comportent des moyens de comparaison pour comparer ledit signal de mesure à au moins un premier seuil de passage aux environs de zéro, des changements d'états d'au moins une sortie desdits moyens de comparaison étant représentatifs d'une détection de passage aux environs de zéro.

Avantageusement, ledit au moins un premier seuil de passage aux environs de zéro est inférieur à la moitié d'un seuil de déclenchement utilisé dans les moyens de traitement pour détecter un défaut différentiel, lesdits environs de zéro étant définis entre zéro et une valeur absolue de seuil de passage aux environs de zéro, ou entre une valeur négative de seuil et une valeur positive de seuil de passage aux environs de zéro.

De préférence, ledit au moins un premier seuil de passage aux environs de zéro est inférieur à 10% d'un seuil de déclenchement utilisé pour détecter un défaut différentiel.

De préférence, les moyens d'inhibition libèrent le déclenchement lorsqu'un passage aux environs de zéro est détecté par les moyens de détection.

Un appareil de coupure électrique comportant les conducteurs principaux connectés en série avec des contacts principaux et un mécanisme d'ouverture desdits contacts principaux comporte un dispositif de protection différentielle tel que défini ci-dessus, lesdits moyens de mesure étant disposés autour des conducteurs principaux pour mesurer un courant différentiel et lesdits moyens actionneurs coopérant avec ledit mécanisme d'ouverture.

Un procédé de protection différentielle selon l'invention comportant :
- la mesure d'un signal de mesure de courant différentiel, et
- le traitement de défaut différentiel pour fournir un signal de déclenchement lorsque le signal de défaut différentiel dépasse un seuil de déclenchement prédéterminé pendant une durée prédéterminée, comporte :
- la détection de signaux de forte énergie perturbant la mesure dudit signal de mesure de courant différentiel, et
- l'inhibition du déclenchement pour bloquer le déclenchement lorsque la mesure est perturbée par des signaux à forte énergie.

Selon l'invention, la détection détecte la présence de signaux à forte énergie par un manque de passage aux environs de zéro dudit signal de mesure de courant différentiel pendant une durée prédéterminée.

Selon l'invention, ladite durée prédéterminée est supérieure à une demi-période ou à une alternance du courant d'un réseau électrique à protéger et inférieure à un temps de déclenchement de protection différentielle.

Dans un mode de réalisation particulier, la détection compare ledit signal de mesure de courant différentiel à au moins un premier seuil de passage aux environs de zéro, un changement d'état de la comparaison étant une détection d'un passage aux environs de zéro.

Avantageusement, ledit au moins un premier seuil de passage aux environs de zéro est inférieur à la moitié d'un seuil de déclenchement utilisé pour détecter un défaut différentiel.

De préférence, l'inhibition libère le déclenchement lorsqu'un passage aux environs de zéro est détecté par la détection.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif de protection différentielle connu ;
- les figures 2A à 2C illustrent des premiers signaux perturbateurs pouvant être reçus par des dispositifs de protection différentielle ;
- les figures 3A à 3C illustrent des seconds signaux perturbateurs pouvant être reçus par des dispositifs de protection différentielle ;
- la figure 4 représente un schéma d'un dispositif de protection différentielle selon un premier mode de réalisation de l'invention ;
- la figure 5 représente un organigramme d'un premier procédé de protection différentielle selon un mode de réalisation de l'invention ;
- la figure 6 illustre des signaux avec perturbation dans un dispositif de protection différentielle selon un mode de réalisation de l'invention ;
- la figure 7 illustre des signaux sans perturbation dans un dispositif de protection différentielle selon un mode de réalisation de l'invention ;
- la figure 8 représente un schéma d'un dispositif de protection différentielle selon un second mode de réalisation de l'invention ;
- les figures 9A à 9E illustrent le traitement des signaux perturbateurs dans un dispositif de protection différentielle selon la figure 8 ;
- la figure 10 représente un organigramme d'un second procédé de protection différentielle selon un mode de réalisation de l'invention ;
- la figure 11 illustre le traitement des signaux sans perturbation dans un dispositif de protection différentielle selon un mode de réalisation de l'invention ;
- la figure 12 illustre le traitement des signaux avec perturbation dans un dispositif de protection différentielle selon un mode de réalisation de l'invention ;
- la figure 13 illustre le traitement des signaux redressés mono alternance sans perturbation dans un dispositif de protection différentielle selon un mode de réalisation de l'invention ;
- la figure 14 illustre le traitement des signaux redressés tronqués mono alternance sans perturbation dans un dispositif de protection différentielle selon un mode de réalisation de l'invention.

### DESCRIPTION DETAILLEE DE MODES DE REALISATION PREFERES

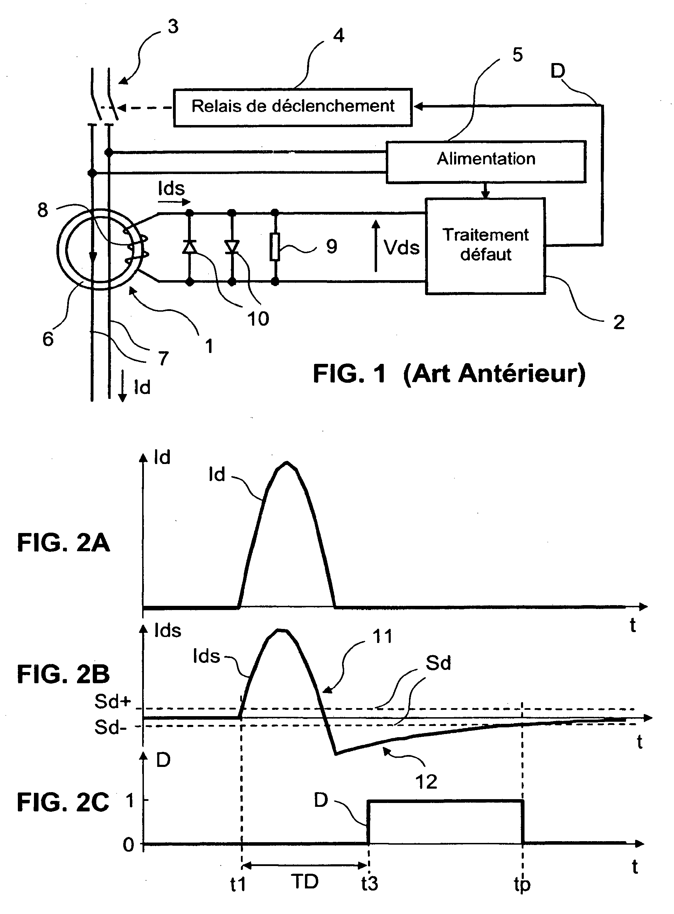

Les dispositifs de protection différentielle comme celui représenté sur la figure 1 comportent un capteur de mesure 1 de courant différentiel, et un circuit de traitement 2 de défaut différentiel connecté un capteur de mesure pour recevoir un signal Ids ou Vds de mesure et pour fournir un signal D de déclenchement. Le signal de mesure Ids ou Vds est comparé à au moins un seuil de déclenchement Sd pour détecter un défaut différentiel. Puis si le seuil de déclenchement est dépassé pendant une durée TD de temporisation prédéterminée, le circuit de traitement fournit le signal D de déclenchement.

La figure 2A illustre une courbe Id d'un courant différentiel circulant dans les conducteurs principaux au circuit primaire d'un tore 6 du capteur 1. Ce courant a une forme d'une demi-période sinusoïdale d'amplitude très élevée et de durée de l'ordre de 8 à 10 millisecondes. Sur la figure 2B, au secondaire un courant Ids est représentatif du courant primaire Id au début 11 de la courbe. Puis à la disparition du courant primaire Id, dans une seconde partie 12 de la courbe, un courant secondaire Ids de traine continue à circuler pour décharger l'énergie stockée dans le circuit magnétique du tore 6. Le courant Ids dépasse un seuil de déclenchement Sd ou Sd+ et Sd- sur la figure 2B entre les instants t1 de début de dépassement et tp de fin de perturbation. La figure 2C illustre le signal de déclenchement D. Après l'instant t1, à la fin d'une durée de temporisation de déclenchement TD, le signal de déclenchement D est actif à l'instant t3. Dans ce cas, le déclenchement n'aurait pas du se produire puisque le signal Id a disparu avant la période TD. L'instant tp arrivant bien après l'instant t3, il y a un déclenchement perturbant la sélectivité du dispositif de protection différentielle.

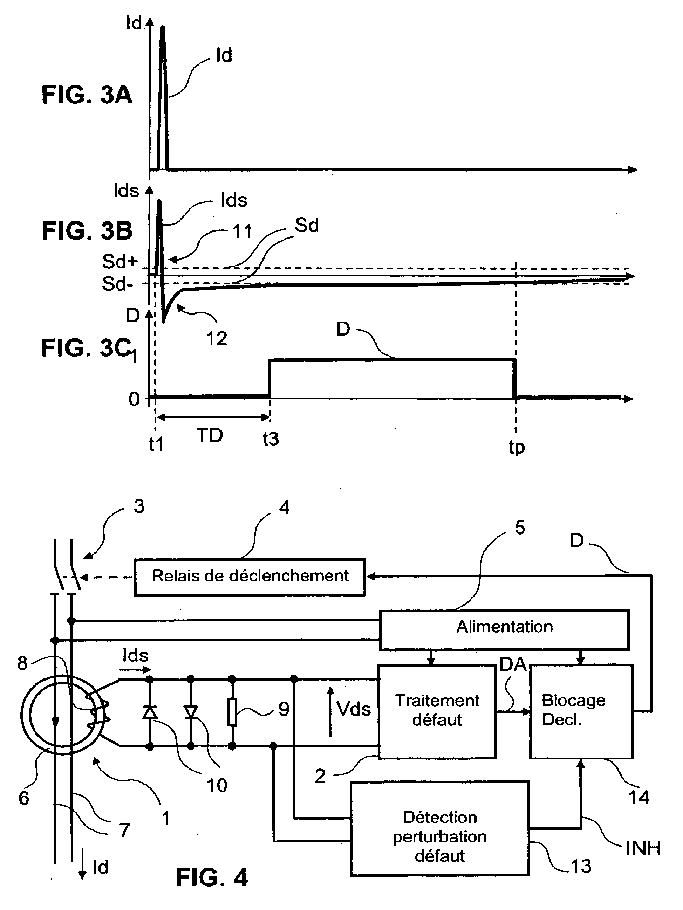

La figure 3A illustre une courbe Id d'un courant différentiel ayant la forme d'une impulsion de forte énergie. Sur la figure 3B, au secondaire un courant Ids a une première partie 11 représentative du courant primaire Id et une seconde partie 12 de la courbe représentative d'un courant de traine pour décharger l'énergie stockée dans le circuit magnétique du tore 6. La figure 3C illustre aussi le signal de déclenchement D qui apparait au bout d'une durée de temporisation de déclenchement TD. Le courant Ids repasse en dessus du seuil Sd- en valeur absolue à l'instant tp bien après l'instant t3 de déclenchement. Un tel signal de perturbation peut aussi perturber la sélectivité ou provoquer des déclenchements indésirables.

La figure 4 représente un schéma d'un dispositif de protection différentielle selon un premier mode de réalisation de l'invention permettant une grande immunité aux perturbations du aux forts courants différentiels et aux impulsions de très forte énergie. Pour assurer cette immunité, le dispositif comporte un circuit 13 de détection de signaux à forte énergie perturbant les capteurs de mesure, et un module 14 d'inhibition connecté au circuit de détection pour inhiber ou bloquer la fourniture du signal de déclenchement D fourni par le circuit de traitement lorsque ledit module de détection détecte la présence de signaux à forte énergie.

Le circuit 13 de détection 13 détecte la présence de signaux à forte énergie par un manque de passage aux environs de zéro dudit signal secondaire Ids ou Vds de mesure pendant une durée prédéterminée TI de contrôle d'inhibition. De préférence, ladite durée prédéterminée TI est supérieure à une demi-période ou une alternance du courant d'un réseau électrique à protéger et inférieure à un temps de déclenchement TD dudit dispositif de protection différentielle. Par exemple, si un réseau électrique est à 50Hz ou 60Hz, la demi-période maximale du réseau est à 10 ms. Le temps de déclenchement TD le plus court en sélectivité est généralement entre 30 et 60 ms. Dans ce cas, TI est alors supérieur à 10 ms et inférieur à 30 ms, soit par exemple 15 ou 22 ms. Ainsi si le signal Ids ou Vds ne passe pas à zéro ou ne revient pas à zéro pendant une durée TI, le circuit 13 de détection fournit un signal d'inhibition INH au circuit d'inhibition pour bloquer la fourniture d'un signal de déclenchement. Dés que le signal Ids ou Vds repasse ou revient à zéro l'inhibition est arrêtée et le déclenchement est de nouveau possible.

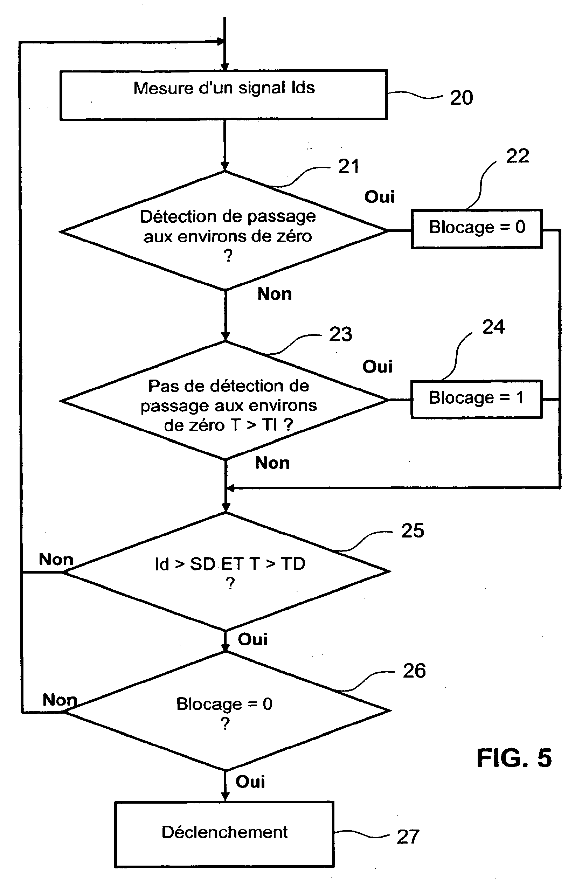

La figure 5 représente un organigramme d'un premier procédé de protection différentielle selon un mode de réalisation de l'invention. Ce procédé de protection différentielle comporte une étape 20 de détection d'un signal Ids de mesure de courant différentiel. Une étape 21 détecte l'absence de signaux de forte énergie perturbant la mesure dudit signal de mesure de courant différentiel. Si un passage aux environs de zéro est détecté, il n'y a pas de perturbation et une étape 22 désactive l'inhibition ou le blocage du déclenchement. Une étape 23 détecte la présence de signaux de forte énergie perturbant la mesure dudit signal de mesure de courant différentiel. Si aucun passage aux environs de zéro n'est détecté pendant une durée TI, il y a une perturbation, alors une étape 24 active l'inhibition ou le blocage du déclenchement. Une étape 25 effectue le traitement de défaut différentiel pour fournir un signal de déclenchement D lorsque le signal de défaut différentiel dépasse un seuil de déclenchement prédéterminé SD pendant une durée TD prédéterminée. Une étape 26 traite l'inhibition du déclenchement pour inhiber ou bloquer le déclenchement lorsque les moyens de mesure sont perturbés par des signaux à forte énergie. Lorsque l'inhibition ou le blocage est désactivé, une étape 27 provoque le déclenchement si les conditions de l'étape 25 sont vraies.

Ainsi l'étape 23 de détection détecte la présence de signaux à forte énergie par un manque de passage aux environs de zéro dudit signal de mesure de courant différentiel pendant une durée prédéterminée TI. Ladite durée prédéterminée TI est supérieure à une période ou à deux demie alternances du courant d'un réseau électrique à protéger et inférieure à un temps de déclenchement TD dudit dispositif de protection différentielle. Les étapes 21 et 22 libèrent le déclenchement lorsqu'un passage aux environs de zéro est détecté.

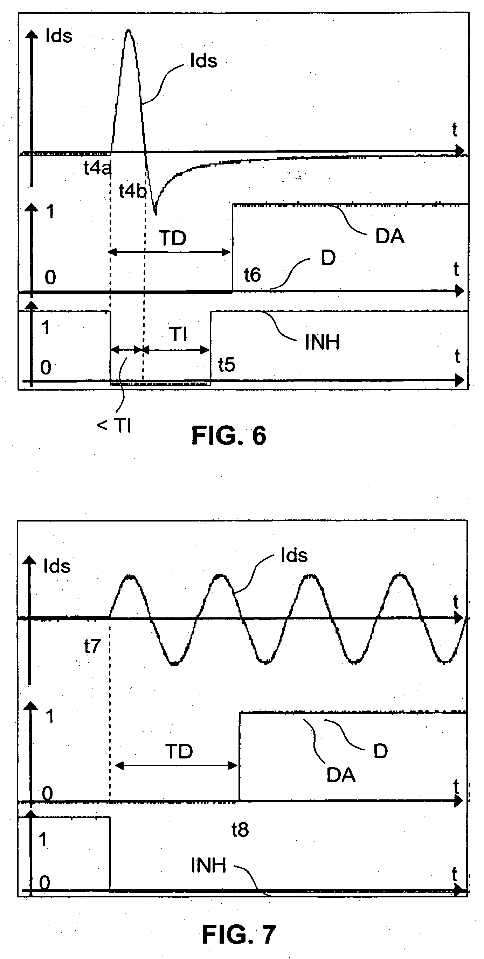

La figure 6 illustre des signaux avec perturbation dans un dispositif de protection différentielle selon un mode de réalisation de l'invention. A un instant t4a, un signal perturbateur de forte énergie très supérieur au seuil de déclenchement apparait, un passage à zéro est détecté, l'inhibition est désactivée et le signal INH est à l'état 0. A un instant t4b, après une durée inférieure à TI, un nouveau passage à zéro est détecté. Ensuite, au bout de la durée TI, à l'instant t5, Ids n'est pas revenu ou passé à zéro. L'inhibition est alors activée et le signal INH passe à l'état 1. Plus tard, au bout de la temporisation de déclenchement TD, à l'instant t6, un signal de déclenchement DA intermédiaire est activé mais il n'est pas fourni en tant que signal de déclenchement D puisque l'inhibition est active. Le signal D reste inactif à zéro. A l'apparition du signal, le démarrage depuis zéro est considéré dans cette description comme un équivalent à un passage aux environs de zéro.

La figure 7 illustre des signaux sans perturbation dans un dispositif de protection différentielle selon un mode de réalisation de l'invention. A un instant t7, un signal différentiel alternatif supérieur au seuil de déclenchement apparait. Un premier passage à zéro au démarrage puis d'autres passages à zéro toutes les demi-alternances se succèdent, l'inhibition est désactivée et le signal INH est à l'état 0. Puisque le signal Ids comporte des passages à zéro rapprochés d'intervalles inférieurs à la durée TI, l'inhibition reste désactivée. Au bout de la temporisation de déclenchement TD, à l'instant t8, un signal de déclenchement DA intermédiaire est activé. Dans ce cas, il est fourni en tant que signal de déclenchement D puisque l'inhibition est désactivée.

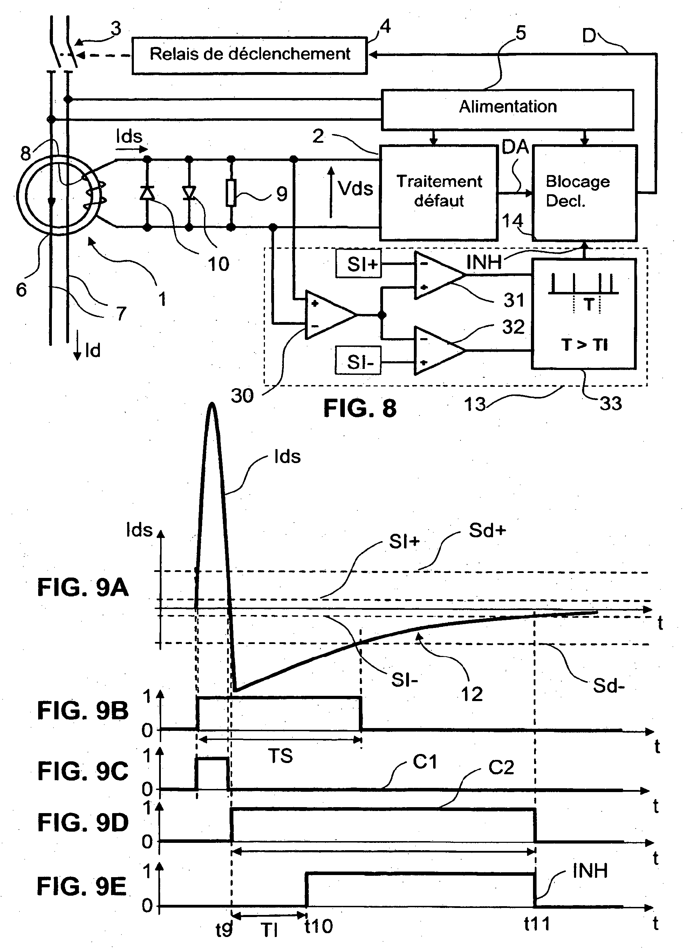

La figure 8 représente un schéma d'un dispositif de protection différentielle selon un second mode de réalisation de l'invention. Le circuit 13 de détection de signaux à forte énergie perturbant les capteurs de mesure comporte des moyens de comparaison pour comparer ledit premier signal de mesure à au moins un premier seuil de passage aux environs de zéro. Sur la figure 8, le circuit 13 comporte un amplificateur différentiel 30 pour amplifier le signal de mesure Vds et fournir un signal Ads référencé par rapport à une ligne de référence électronique. Un premier comparateur 31 compare le signal amplifié Ads à premier seuil SI+ positif pour détecter des passages aux environs de zéro, par exemple les passages à zéro, les démarrages proches de zéro ou les retours à zéro du coté positifs du signal. Un seconds comparateur 32 compare le signal amplifié Ads à second seuil SI-négatif pour détecter des passages proche aux environs de zéro, par exemple les passages à zéro, les démarrages proche de zéro ou les retours à zéro du coté négatifs du signal. Les sorties des comparateurs sont connectées à un module 33 de contrôle pour déterminer l'inhibition en fonction des fronts montants ou descendants des sorties des comparateurs. Par exemple, un signal d'inhibition INH est fourni si aucun front n'est détecté pendant une durée supérieure à la durée prédéterminée de contrôle d'inhibition TI.

Avantageusement, dans le cas du schéma de la figure, le traitement des fronts peut aussi être limité à un même type de front pour le comptage de la temporisation TI. Dans ce cas, un traitement indépendant des deux types de fronts peut nécessiter deux comptages de temporisation TI.

Les seuils SI+ et SI- définissent une fenêtre de contrôle autour de zéro entre Si- et Si+. Le passage aux environs de zéro décrit plus haut signifie aussi un passage l'intérieur de cette fenêtre quelque soit le sens d'arrivée ou de sortie. Le circuit 33 peut faire aussi des contrôles supplémentaires en fournissant un signal d'inhibition INH si aucun front n'est détecté pendant une durée supérieure à la durée prédéterminée de contrôle d'inhibition TI et si un comparateur indique un état du signal en dehors de la fenêtre Si-, SI+, c'est-à-dire si le signal est supérieur à un seuil SI en valeur absolue.

Les figures 9A à 9E illustrent le traitement des signaux perturbateurs dans un dispositif de protection différentielle selon la figure 8. La figure 9A illustre un signal Ids de forte énergie avec une seconde partie 12 de traine. Des seuils de déclenchement Sd+ et Sd- et des seuils d'inhibition SI+ et SI- sont reportés sur cette figure et calibrés par rapport à Ids. Les seuils d'inhibition SI+ et SI- déterminant le passage à zéro ou de retour à zéro sont inférieurs en valeur absolue à la moitié des seuils de déclenchement Sd+ et Sd- en valeur absolue utilisés dans les moyens de traitement pour détecter un défaut différentiel. La figure 9B montre un signal S représentatif du dépassement du seuil de déclenchement Sd+ ou Sd- soit Sd en valeur absolue. Le seuil de déclenchement est dépassé pendant une période TS. Le bref passage à zéro est inopérant dans la détection de passage du seuil de déclenchement. La figure 9C montre l'état d'une sortie C1 d'un comparateur 31 contrôlant le passage du seuil SI+ positif. La figure 9D montre l'état d'une sortie C2 d'un comparateur 32 contrôlant le passage du seuil SI- négatif. La figure 9E illustre le signal d'inhibition INH. A l'instant t9, le signal Ids franchit le seuil Si- en sortant de la fenêtre SI+, Si-. La sortie C2 change d'état en passant à 1 avec un front montant. Puis à la fin de la durée prédéterminée TI, à l'instant t10, l'inhibition est activée puisqu'aucun autre front n'est détecté. Le déclenchement est alors bloqué même si le signal de traine de la partie 12 est encore au dessus du seuil Sd- en valeur absolue. Puis à l'instant t11, le signal Ids passe au niveau du seuil SI-, un changement d'état et /ou un front est détecté, l'inhibition est alors immédiatement désactivée pour permettre le déclenchement en cas de défauts différentiels. Ainsi, le circuit 13 et le module 14 libèrent le déclenchement lorsqu'un passage à zéro ou un retour à zéro est détecté par les moyens de détection.

De même dans un procédé selon un mode réalisation de l'invention, la détection compare ledit signal de mesure de courant différentiel Ids à au moins un premier seuil Si, Si+ ou Si- de passage aux environs de zéro pour lancer une temporisation T1, T2 et pour déterminer une durée en fonction de changements d'états d'au moins une comparaison. Avantageusement, ledit au moins un premier seuil de passage aux environs de zéro est inférieur à la moitié d'un seuil de déclenchement Sd, Sd+, Sd- utilisé pour le traitement de la détection un défaut différentiel.

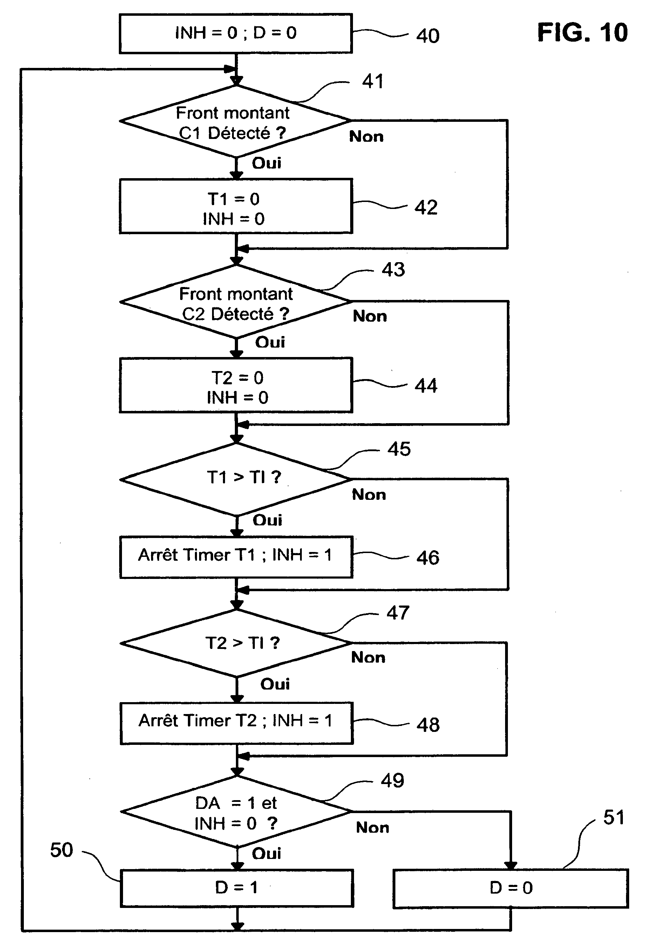

La figure 10 représente un organigramme d'un second procédé de protection différentielle selon un mode de réalisation de l'invention. A une étape 40, les signaux de déclenchement et d'inhibition sont désactivés. Si un front est détecté à une étape 41 correspondant à une première comparaison, une première temporisation T1 est démarrée à une étape 42. Si un front est détecté à une étape 43 correspondant à une seconde comparaison, une seconde temporisation T2 est démarrée à une étape 44. Si la première temporisation T1 dépasse la durée prédéterminée TI à une étape 45, l'inhibition est activée à une étape 46. Si la seconde temporisation T2 dépasse la durée prédéterminée TI à une étape 47, l'inhibition est activée à une étape 48. A une étape 49, si un défaut et détecté et si l'inhibition est désactivée, un déclenchement se produit à l'étape 50. Sinon à l'étape 51 un signal de déclenchement est désactivé ou mis à zéro.

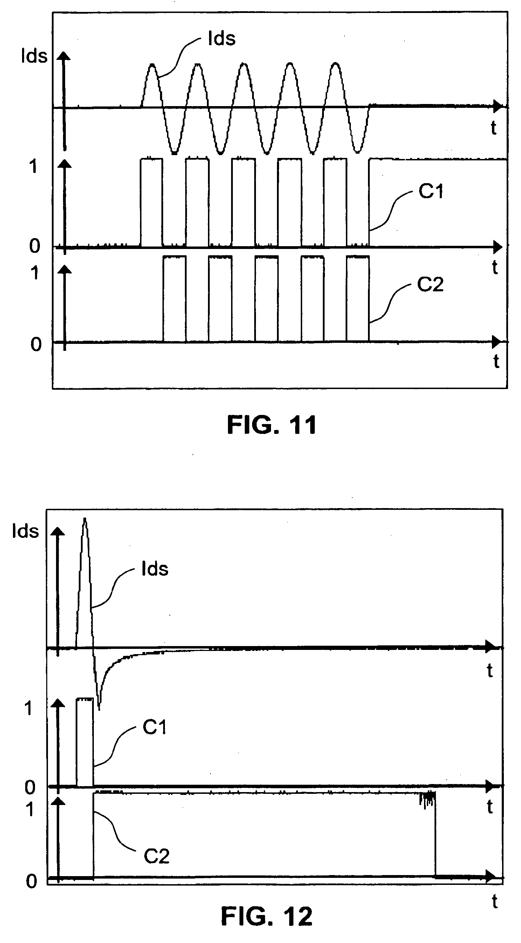

La figure 11 illustre le traitement des signaux sans perturbation dans un dispositif de protection différentielle selon un mode de réalisation de l'invention. Le signal Id est alternatif et les comparateurs basculent à chaque passage à zéro. Il n'y à pas d'inhibition du de blocage du déclenchement. La figure 12 illustre le traitement des signaux avec perturbations dans un dispositif de protection différentielle selon un mode de réalisation de l'invention. Le signal Id est perturbé les comparateurs basculent au début du signal mais restent dans le même état pendant une longue durée. L'inhibition ou le blocage du déclenchement se fait au bout d'une durée TI après le dernier changement d'état.

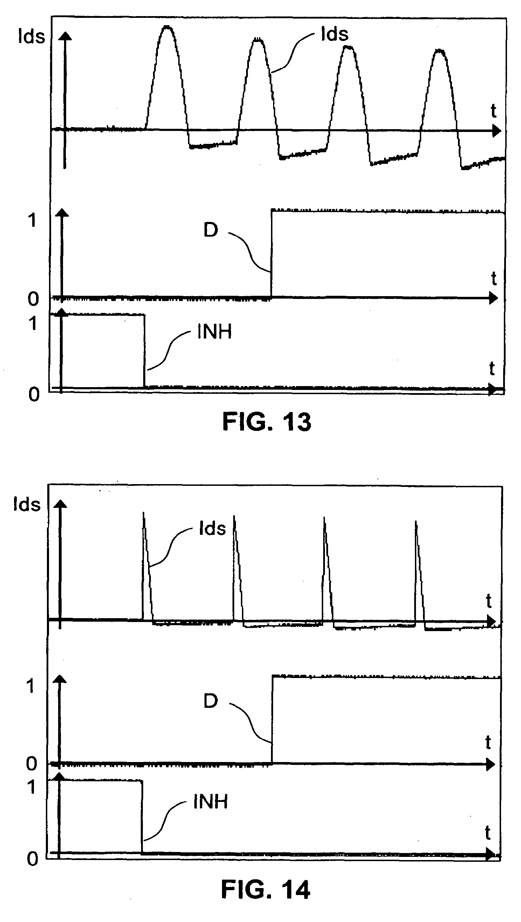

Les figure 13 et 14 illustrent le traitement des signaux sans perturbation dans un dispositif de protection différentielle selon un mode de réalisation de l'invention, les signaux étant respectivement redressés mono alternance et redressés tronqués mono alternance. Ces signaux étant de véritables signaux de défauts différentiels, régulièrement ils passent, reviennent ou repartent de zéro. Ainsi, à l'apparition du signal, l'inhibition est mise ou confirmée à zéro. Puis au bout d'un temps de déclenchement TD un signal de déclenchement est fourni pour activer le mécanisme d'ouverture des contacts principaux.

Dans les dispositifs et les procédés selon l'invention les signaux Ids peuvent être traités directement en alternatif ou redressés avant traitement. Les seuils de déclenchement Sd, Sd+ ou Sd- ainsi que les seuils SI, SI+, SI- de détection de l'inhibition INH peuvent être polarisés ou en valeurs absolues. Ils s'appliquent directement aux valeurs de courants différentiels de manière générique ou à des signaux, des images, ou des données représentatifs du courant différentiel secondaire Ids. Avantageusement, la valeur des seuils SI, SI+, SI- de détection de l'inhibition INH sont de l'ordre de 10% de la valeur des seuils de déclenchement Sd, Sd+ ou Sd-en valeurs absolues.

Le traitement des seuils SI, SI+, SI- de détection de l'inhibition INH et des sorties des comparateurs peut tenir compte de différentes combinaisons logiques, notamment du franchissement quelque soit le seuil franchi en positif ou négatif, du franchissement en amplitude en partant vers une grande amplitude et le retour vers zéro, ou du dépassement du seuil en valeur absolue pendant toute la durée. Dans ce cas, l'inhibition peut être aussi désactivée si le signal Ids est inferieur aux seuils SI, SI+, SI- en valeur absolue.

La détection peut être d'une durée indéfinie dans l'attente d'un retour aux environs de zéro mais elle peut également être limitée dans le temps. Par exemple, elle peut durer un temps maximal fixe de l'ordre de une ou plusieurs secondes ou un temps supérieur à un temps de déclenchement le plus élevé en cas de systèmes à réglages de temps de déclenchement.

Le circuit 13 et le module 14 peuvent être réalisés en circuits indépendants ou groupés en un même circuit. Ils peuvent aussi être intégrés dans le circuit de traitement 2 en tant que fonctions ou modules supplémentaire à la protection classique.

Un dispositif selon l'invention peut être intégré dans un relais de protection différentiel indépendant ou dans un appareil de coupure électrique tel qu'un interrupteur ou disjoncteur comportant les conducteurs principaux connectés en série avec contacts principaux et un mécanisme d'ouverture des contacts principaux.

Le courant différentiel décrit ci-dessus correspond également à un courant résiduel, a un courant de fuite, à un courant de défaut terre ou à un courant homopolaire. Les dispositifs selon l'invention s'appliquent aussi bien aux distributions électriques bipolaires, tripolaires ou tétra-polaires.

## Revendications

1. Dispositif de protection différentielle comportant :
- des moyens de mesure (1, 6, 8) de courant différentiel (Id), et
- des moyens de traitement (2) de défaut différentiel connectés aux moyens de mesure pour recevoir un signal (Ids, Vds) de mesure fourni par les moyens de mesure et pour fournir un signal de déclenchement (D) à des moyens actionneurs (4),
- des moyens de détection (13) de signaux (11, 12) à forte énergie perturbant lesdits moyens de mesure (1), et
- des moyens d'inhibition (14, 26, 49) connectés audits moyens de détection (13) pour inhiber la fourniture dudit signal (D) de déclenchement fourni par les moyens (2) de traitement lorsque lesdits moyens (13) de détection détectent la présence de signaux (11, 12) à forte énergie,
**caractérisé en ce que**:
lesdits moyens de détection détectent la présence de signaux (11, 12) à forte énergie en contrôlant un manque de passage aux environs de zéro dudit signal (Ids, Vds) de mesure pendant une durée (TI) prédéterminée,
ladite durée (TI) prédéterminée est supérieure à une demi-période ou à une alternance du courant d'un réseau électrique à protéger et inférieure à un temps (TD) de déclenchement dudit dispositif de protection différentielle.

2. Dispositif selon la revendication 1 **caractérisé en ce que** les moyens de détection comportent des moyens de comparaison (31, 32, C1, C2, 41, 42) pour comparer ledit signal (Ids, Vds) de mesure à au moins un premier seuil (SI, SI+, SI-) de passage aux environs de zéro, des changements d'états (C1, C2, 41, 42) d'au moins une sortie desdits moyens de comparaison étant représentatifs d'une détection de passage aux environs de zéro.

3. Dispositif selon la revendication 2 **caractérisé en ce que** ledit au moins un premier seuil (SI, SI+, SI-) de passage aux environs de zéro est inférieur à la moitié d'un seuil (Sd, Sd+, Sd-) de déclenchement utilisé dans les moyens de traitement pour détecter un défaut différentiel, lesdits environs de zéro étant définis entre zéro et une valeur absolue de seuil (SI) de passage aux environs de zéro, ou entre une valeur négative de seuil (SI-) et une valeur positive de seuil (SI+) de passage aux environs de zéro.

4. Dispositif selon la revendication 3 **caractérisé en ce que** ledit au moins un premier seuil (SI, SI+, SI-) de passage aux environs de zéro est inférieur à 10% d'un seuil (Sd, Sd+, Sd-) de déclenchement utilisé pour détecter un défaut différentiel.

5. Dispositif selon l'une quelconque des revendications 1 à 4 **caractérisé en ce que** les moyens (14) d'inhibition libèrent le déclenchement lorsqu'un passage aux environs de zéro est détecté par les moyens de détection.

6. Appareil de coupure électrique comportant les conducteurs (7) principaux connectés en série avec des contacts (3) principaux et un mécanisme (4) d'ouverture desdits contacts principaux,
**caractérisé en ce qu'**il comporte un dispositif de protection différentielle selon l'une des revendications 1 à 5, lesdits moyens (1) de mesure étant disposés autour des conducteurs (7) principaux pour mesurer un courant différentiel (Id) et lesdits moyens actionneurs coopérant avec ledit mécanisme (4) d'ouverture.

7. Procédé de protection différentielle comportant :
- la mesure (20) d'un signal (Ids) de mesure de courant différentiel, et
- le traitement (25) de défaut différentiel pour fournir un signal (D) de déclenchement lorsque le signal de défaut différentiel dépasse un seuil (Sd, Sd+, Sd-) de déclenchement prédéterminé pendant une durée (TD) prédéterminée,
**caractérisé en ce qu'**il comporte :
- la détection (21, 23, 41, 43, 45, 47) de signaux de forte énergie perturbant la mesure dudit signal de mesure de courant différentiel, ladite détection (21, 23, 41, 43, 45, 47) détectant la présence de signaux à forte énergie par un manque de passage aux environs de zéro dudit signal (Ids, Vds) de mesure de courant différentiel pendant une durée (TI) prédéterminé, ladite durée (TI) prédéterminée étant supérieure à une demi-période ou à une alternance du courant d'un réseau électrique à protéger et inférieure à un temps (TD) de déclenchement de protection différentielle, et
- l'inhibition (22, 24; 26, 46, 48, 51) du déclenchement pour bloquer le déclenchement lorsque la mesure est perturbée par des signaux à forte énergie.

8. Procédé de protection différentielle selon la revendication 7 **caractérisé en ce que** la détection (21, 23, 41, 43, 45, 47) compare ledit signal (Ids, Vds) de mesure de courant différentiel à au moins un premier seuil (SI, SI+, SI-) de passage aux environs de zéro, un changement d'état de la comparaison (C1, C2) étant une détection d'un passage aux environs de zéro.

9. Procédé de protection différentielle selon l'une des revendications 7 ou 8 **caractérisé en ce que** ledit au moins un premier seuil (SI, SI+, SI-) de passage aux environs de zéro est inférieur à la moitié d'un seuil (Sd, Sd+, Sd-) de déclenchement utilisé pour détecter un défaut différentiel.

10. Procédé de protection différentielle selon l'une quelconque des revendications 7 à 9 **caractérisé en ce que** l'inhibition libère le déclenchement lorsqu'un passage aux environs de zéro est détecté par la détection.

## Patentansprüche

1. Vorrichtung zum Differentialschutz,
umfassend:
- Mittel zum Messen (1, 6, 8) eines Differenzstroms (Id) und
- Mittel zum Verarbeiten (2) eines Differenzstromfehlers, die mit den Mitteln zum Messen verbunden sind, um ein Messsignal (Ids, Vds) zu erhalten, das durch die Mittel zum Messen geliefert wird, und um ein Auslösesignal (D) an Betätigungsmittel (4) zu liefern,
- Mittel zum Erfassen (13) von Hochenergiesignalen (11, 12), die die Mittel zum Messen (1) stören, und
- Mittel zum Sperren (14, 26, 49), die mit den Mitteln zum Erfassen (13) verbunden sind, um die Lieferung des Auslösesignals (D), das von den Mitteln zum Verarbeiten (2) geliefert wird, zu sperren, wenn die Mittel (13) zum Erfassen das Vorhandensein von Hochenergiesignalen (11, 12) erfassen,
**dadurch gekennzeichnet, dass**:
die Mittel zum Erfassen das Vorhandensein von Hochenergiesignalen (11, 12) erfassen, indem sie einen fehlenden Durchgang in der Nähe von Null des Messsignals (Ids, Vds) während einer vorbestimmten Zeitdauer (TI) überprüfen,
die vorbestimmte Zeitdauer (TI) größer als eine Halbperiode oder eine Halbschwingung des Stroms eines zu schützenden elektrischen Stromnetzes und kleiner als eine Auslösezeit (TD) der Vorrichtung zum Differentialschutz ist.

2. Vorrichtung nach Anspruch 1, **dadurch gekennzeichnet, dass** die Mittel zum Erfassen Vergleichsmittel (31, 32, C1, C2, 41, 42) aufweisen, um das Messsignal (Ids, Vds) mit mindestens einem ersten Schwellenwert (SI, SI+, SI-) des Durchgangs in der Nähe von Null zu vergleichen, wobei Zustandsänderungen (C1, C2, 41, 42) von mindestens einem Ausgang der Vergleichsmittel für eine Erkennung des Durchgangs in der Nähe von Null repräsentativ sind.

3. Vorrichtung nach Anspruch 2, **dadurch gekennzeichnet, dass** der mindestens eine Schwellenwert (SI, SI+, SI-) des Durchgangs in der Nähe von Null niedriger als die Hälfte eines Schwellenwerts (Sd, Sd+, Sd-) zum Auslösen ist, der in den Mitteln zum Verarbeiten verwendet wird, um einen Differenzstromfehler zu erkennen, wobei der Bereich in der Nähe von Null zwischen Null und einem Absolutschwellenwert (SI) des Durchgangs in der Nähe von Null oder zwischen einem negativen Schwellenwert (SI-) und einem positiven Schwellenwert (SI+) des Durchgangs in der Nähe von Null definiert ist.

4. Vorrichtung nach Anspruch 3, **dadurch gekennzeichnet, dass** der mindestens eine Schwellenwert (SI, SI+, SI-) des Durchgangs in der Nähe von Null niedriger als 10 % eines Schwellenwerts (Sd, Sd+, Sd-) zum Auslösen ist, der verwendet wird, um einen Differenzstromfehler zu erkennen.

5. Vorrichtung nach einem der Ansprüche 1 bis 4, **dadurch gekennzeichnet, dass** die Mittel zum Sperren (14) das Auslösen freigeben, wenn von den Mitteln zum Erfassen ein Durchgang in der Nähe von Null erkannt wird.

6. Elektrisches Schaltgerät, das die Hauptleiter (7), die in Reihe mit den Hauptkontakten (3) geschaltet sind, und einen Mechanismus (4) zum Öffnen der Hauptkontakte aufweist,
**dadurch gekennzeichnet, dass** es eine Vorrichtung zum Differentialschutz nach einem der Ansprüche 1 bis 5 aufweist, wobei die Mittel (1) zum Messen um die Hauptleiter (7) angeordnet sind, um einen Differenzstrom (Id) zu messen, und die Betätigungsmittel mit dem Mechanismus (4) zum Öffnen zusammenwirken.

7. Verfahren zum Differentialschutz, umfassend:
- das Messen (20) eines Messsignals (Ids) eines Differenzstroms und
- die Verarbeitung (25) eines Differenzstromfehlers, um ein Auslösesignal (D) zu liefern, wenn das Signal des Differenzstromfehlers einen vorbestimmten Schwellenwert (Sd, Sd+, Sd-) zum Auslösen während einer vorbestimmten Zeitdauer (TD) überschreitet,
**dadurch gekennzeichnet, dass** es Folgendes aufweist:
- das Erfassen (21, 23, 41, 43, 45, 47) von Hochenergiesignalen, die das Messen des Messsignals eines Differenzstroms stören, wobei das Erfassen (21, 23, 41, 43, 45, 47) das Vorhandensein von Hochenergiesignalen durch einen fehlenden Durchgang in der Nähe von Null des Messsignals (Ids, Vds) des Differenzstroms während einer vorbestimmten Zeitdauer (TI) erkennt,
wobei die vorbestimmte Zeitdauer (TI) größer als eine Halbperiode oder eine Halbschwingung des Stroms eines zu schützenden elektrischen Stromnetzes und kleiner als eine Auslösezeit (TD) der Vorrichtung zum Differentialschutz ist und
- das Sperren (22, 24; 26, 46, 48, 51) des Auslösens, um das Auslösen zu sperren, wenn das Messen durch Hochenergiesignale gestört wird.

8. Verfahren zum Differentialschutz nach Anspruch 7, **dadurch gekennzeichnet, dass** das Erfassen (21, 23, 41, 43, 45, 47) das Messsignal (Ids, Vds) eines Differenzstroms mit mindestens einem ersten Schwellenwert (SI, SI+, SI-) des Durchgangs in der Nähe von Null vergleicht, wobei eine Zustandsänderung des Vergleichs (C1, C2) eine Erkennung eines Durchgangs in der Nähe von Null ist.

9. Verfahren zum Differentialschutz nach einem der Ansprüche 7 oder 8, **dadurch gekennzeichnet, dass** der mindestens eine Schwellenwert (SI, SI+, SI-) des Durchgangs in der Nähe von Null niedriger als die Hälfte eines Schwellenwerts (Sd, Sd+, Sd-) zum Auslösen ist, der verwendet wird, um einen Differenzstromfehler zu erkennen.

10. Verfahren zum Differentialschutz nach einem der Ansprüche 7 bis 9, **dadurch gekennzeichnet, dass** das Sperren das Auslösen freigibt, wenn von dem Erfassen ein Durchgang in der Nähe von Null erkannt wird.

## Claims

1. Differential protection device comprising:
- differential current (Id) measuring means (1, 6, 8), and
- differential fault processing means (2) connected to the measuring means so as to receive a measurement signal (Ids, Vds) supplied by the measuring means and so as to supply a trip signal (D) to actuating means (4),
- detection means (13) for detecting high-energy signals (11, 12) disturbing said measuring means (1), and
- inhibition means (14, 26, 49) connected to said detection means (13) so as to inhibit the supply of said trip signal (D) supplied by the processing means (2) when said detection means (13) detect the presence of high-energy signals (11, 12),
**characterized in that**:
said detection means detect the presence of high-energy signals (11, 12) by monitoring an absence of zero-range crossing in said measurement signal (Ids, Vds) over a predetermined duration (TI),
said predetermined duration (TI) is longer than a half-period or an alternation of the current of a mains electricity supply to be protected and less than a trip time (TD) of said differential protection device.

2. Device according to Claim 1, **characterized in that** the detection means comprise comparing means (31, 32, C1, C2, 41, 42) so as to compare said measurement signal (Ids, Vds) with at least one first zero-range crossing threshold (SI, SI+, SI-), changes of state (C1, C2, 41, 42) at at least one output of said comparing means being representative of a detection of zero-range crossing.

3. Device according to Claim 2, **characterized in that** said at least one first threshold (SI, SI+, SI-) of zero-range crossing is below half of a trip threshold (Sd, Sd+, Sd-) used in the processing means for detecting a differential fault, said zero range being defined between zero and an absolute zero-range crossing threshold value (SI), or between a negative threshold value (SI-) and a positive zero-range crossing threshold value (SI+).

4. Device according to Claim 3, **characterized in that** said at least one first zero-range crossing threshold (SI, SI+, SI-) is below 10% of a trip threshold (Sd, Sd+, Sd-) used for detecting a differential fault.

5. Device according to any one of Claims 1 to 4, **characterized in that** the inhibition means (14) release the trip when a zero-range crossing is detected by the detection means.

6. Electrical switching device comprising the main conductors (7) connected in series with main contacts (3) and an opening mechanism (4) for said main contacts,
**characterized in that** it comprises a differential protection device according to one of Claims 1 to 5, said measuring means (1) being arranged around the main conductors (7) so as to measure a differential current (Id) and said actuating means cooperating with said opening mechanism (4).

7. Differential protection method comprising:
- measurement (20) of a differential current measurement signal (Ids), and
- differential fault processing (25) so as to supply a trip signal (D) when the differential fault signal exceeds a predetermined trip threshold (Sd, Sd+, Sd-) over a predetermined duration (TD),
**characterized in that** it comprises:
- detection (21, 23, 41, 43, 45, 47) of high-energy signals disturbing the measurement of said differential current measurement signal, said detection (21, 23, 41, 43, 45, 47) detecting the presence of high-energy signals through an absence of zero-range crossing in said differential current measurement signal (Ids, Vds) over a predetermined duration (TI), said predetermined duration being greater than a half-period or an alternation of the current of a mains electricity supply to be protected and less than a differential-protection trip time (TD), and
- inhibition (22, 24; 26, 46 48, 51) of tripping so as to block tripping when the measurement is disturbed by high-energy signals.

8. Differential protection method according to Claim 7, **characterized in that** the detection (21, 23, 41, 43, 45, 47) compares said differential current measurement signal (Ids, Vds) with at least one first zero-range crossing threshold (SI, SI+, SI-), a change of state for the comparison (C1, C2) being a detection of a zero-range crossing.

9. Differential protection method according to either of Claims 7 and 8, **characterized in that** said at least one first zero-range crossing threshold (SI, SI+, SI-) is below half of a trip threshold (Sd, Sd+, Sd-) used for detecting a differential fault.

10. Differential protection method according to any one of Claims 7 to 9, **characterized in that** the inhibition releases the trip when a zero-range crossing is detected by the detection.
